# EUROPEAN PATENT SPECIFICATION

(11) **EP 1 661 769 B1**
(45) Date of publication and mention of the grant of the patent: **25.03.2009**
(21) Application number: 04257356.8
(22) Date of filing: 26.11.2004
(51) Int. Cl.: B60R 21/045

(54) **Knee restraint for a vehicle**
Kniestütze für Kraftfahrzeuge
Protège-genoux pour véhicules

(43) Date of publication of application: 31.05.2006
(73) Proprietor: Delphi Technologies, Inc., Troy, MI 48007 (US)
(72) Inventor: Dancasius, Michael, c/o Delphi Technologies Inc, 4940 Bascharage (LU); Fischer, Harald, c/o Delphi Technologies Inc, 4940 Bascharage (LU); Ecker, Andreas, c/o Delphi Technologies Inc, 4940 Bascharage (LU); van der Mühlen, Achim, c/o Delphi Technologies Inc, 4940 Bascharage (LU); Büngeler, Jörg, c/o Delphi Technologies Inc, 4940 Bascharage (LU)
(74) Representative: Manitz, Finsterwald & Partner GbR

(56) References cited:
- US-A- 3 929 948
- US-A- 4 320 909
- US-A- 4 721 329
- US-A- 5 098 124
- US-A- 5 273 314
- US-A- 6 145 880
- US-A1- 2004 056 463

## Description

The present invention relates to a knee restraint for a vehicle and in particular a knee restraint to support, guide and protect the knees of the front seat occupant's of a vehicle, more particularly a car, during a frontal collision.

The use of airbags and seat belts have greatly reduced head and upper body injuries of vehicle occupants during frontal collisions. However, the occupant's legs and pelvic region frequently sustain serious injury due to impact of the occupant's knees with rigid cabin structures and components, for example the steering column assembly and instrument panel supports.

Areas of the occupant's body at particular risk from injury are the Femur and Tibia, as well as the hip joints and pelvis, thus the forces and moments which are applied to such joints by impact of the knees with the cabin structures and components must not be allowed to exceed a certain limits.

Whilst it is known to provide energy absorbing structures in the region where knee impact is likely to occur, such structures are usually poorly supported in the region of the steering column assembly which can lead to increased deflection of the instrument panel in such region which can cause the driver's knees to be guided towards the steering column assembly, increasing the risk of injury.

Furthermore, the resistance to deflection and rigidity of the left and right knee impact areas can vary due to different design shapes and structures of such regions of the instrument panel and glove box which are a function of the styling and packaging of the components as well as the components' properties. Such difference in resistance to deflection results in a difference in the deflection of the occupant's left and right knee during a frontal collision which can cause the occupant's head and torso to rotate, adversely affecting the occupant's safety and risk of injury.

US 4,721,329 discloses a deformable knee bolster exhibiting positive knee capture by means of pocketing deformation of the knee bolster that occurs upon knee impact with the bolster. Such document does not address the problem of torso rotation.

According to the present invention there is provided a knee restraint for a vehicle as claimed in claim 1.

The transverse member is connectable to the vehicle body by means of a first support member at or adjacent a first side of the transverse member and a second support member at or adjacent a second side of the transverse member, the relative stiffness of the first and second support members being predetermined or selected to provide substantially equal deflection in the case of an impact by a respective left and right knee of a vehicle occupant, thereby preventing rotation of the occupant's body during impact with the knee restraint in the event of a collision.

Preferably each of the first and second support members includes at least one notch, or cut-out, or other region of reduced material thickness or cross section in each support member, the stiffness of each of the first and second support members being determined by the size and/or shape of the notch or cut-out therein.

Preferably the reinforcement means extends between the support members. The reinforcement means may be affixed to the support members.

Preferably the transverse member includes a first layer of energy absorbing foam for absorbing the impact of the occupant's knees therewith. The reinforcement means may be affixed to or embedded within the first layer of energy absorbing foam.

In one embodiment, the reinforcement means comprises a second layer of foam having a greater stiffness and/or hardness and/or density than the first layer of foam. Preferably the first layer of foam has a density of between 30 and 60 g/l and the second layer of foam has a density of at least 100g/l.

In an alternative embodiment the reinforcement means comprises a sheet of rigid material. The sheet of rigid material may be formed from plastic or from a metal, such as steel, aluminium or magnesium. Alternatively the reinforcement means may comprise a thin walled deformable structure to further improve energy absorbtion properties of the knee restraint.

Preferably the support members are adapted to be deformable to absorb the impact of the occupant's knees with the knee restraint.

The support members can be formed in different designs using different materials (Al, Steel, Mg, Plastic, etc.) and technologies (rolled formed, deep drawn, die cast, moulded, etc.).

Embodiments of the invention will now be described, by way of example only, with reference to the drawings, in which:
Figure 1 is a part sectional perspective view of part of a knee restraint according to a first embodiment of the invention;
Figure 2 is a part sectional perspective view of a part of a knee restraint according to a second embodiment of the invention;
Figure 3 is a part sectional side view of a knee restraint according to a third embodiment of the invention;
Figure 4 is a part sectional side view of a fourth embodiment of the invention;
Figure 5 is a part sectional side view of fifth embodiment of the invention.

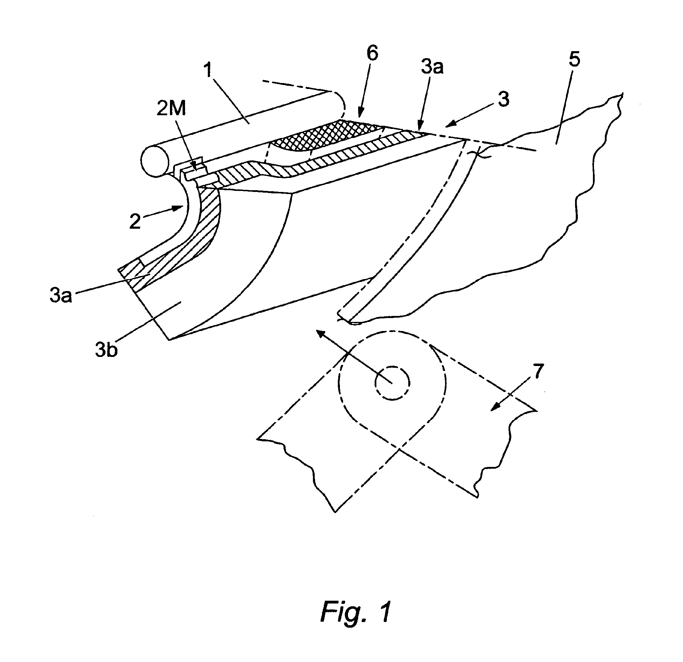

Figure 1 shows a knee restraint according to a first embodiment of the present invention applied to a passenger car. The knee restraint is attached to a cross car beam 1 extending transversely across the width of the vehicle approximately between the A-pillars such that the knee restraint extends across the car in front of the occupant's knees 7 and beneath the instrument panel. The knee restraint is attached to the cross car beam 1 by means of two cantilevered support brackets 2 (only one side shown) provided adjacent each side of a transverse member 3. The support brackets 2 are located in the region of the left and the right knee impact line.

The transverse member 3 defines a knee impact element formed from a first or inner layer of relatively rigid high density foam 3a (e.g. at least 100g/l foam density) providing a reinforcement means extending between the support brackets 2 to resist bending/displacement of the central region of the transverse member 3 and a second or outer layer of relatively low density foam 3b (e.g. 30-60 g/l foam density) intended to absorb the impact of the occupant's knees 7 therewith in the event of a frontal collision. As alternative to the low density foam 3b it is possible to implement a deformable thin wall structure from plastic or metal (for example honeycomb structures). The outer layer of foam 3a would be covered by a skin or cover 5 of plastic or vinyl material, which might form part of the instrument panel or interior of the vehicle, or the knee restraint might be mounted behind the instrument panel or vehicle interior trim.

The transverse member 3 extends across the steering column assembly 6, beneath the instrument panel. In the event of a frontal impact the knees 7 of the vehicle occupant impact the transverse member 3, the energy of such impact being at least partially absorbed by deformation of the outer layer of low density foam 3b. The first or inner layer of relatively rigid high density foam 3a resists deflection or bowing of the transverse member 3 in the unsupported region between the support brackets 2 which might otherwise lead or guide the occupant's knees towards the steering column assembly 6 which might lead to an increased risk of injury to the occupant.

In the embodiment shown in Figure 1, each of the cantilevered support brackets 2 is provided with a notch 2M adjacent the cross car beam 1 which creates a preferential bending point about which the brackets 2 can bend during impact of the occupant's knees 7 with the transverse member 3 to further absorb the energy of impact. By careful selection of the size and depth of the notch 2M the stiffness of the each bracket 2 can be varied or "tuned" to compensate for different forces applied to each side of the transverse member 3 by the occupant's right and left knee, to ensure that each side of the transverse member 3 deflects by an equal amount, thus avoiding potentially dangerous twisting of the occupant's torso which might otherwise occur if each side of the transverse member 3 was deformed by different amounts.

Furthermore, for the same reason, the wall thickness, of the transverse member 3, the outer layer of low density foam 3b, the inner layer of relatively rigid high density foam 3a, as well as of the inlay 4 can be selected in each of the left and right knee impact areas to provide accordingly different system resistance and rigidity properties in each impact area.

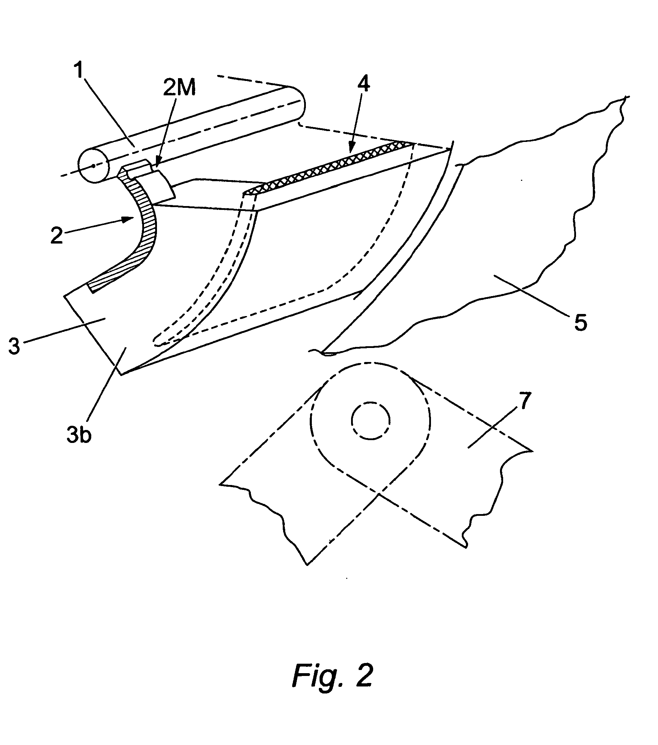

In the second embodiment shown in Figure 2, the reinforcement means reinforcing the transverse member 3 comprises a rigid sheet like inlay 4 of high density foam, plastic or metal (such as steel, aluminium or magnesium). The impact absorbing foam layer 3b is preferably integrally moulded with the inlay 4. The remainder of the knee restraint is identical in construction to that of the first embodiment and thus will not be described in more detail.

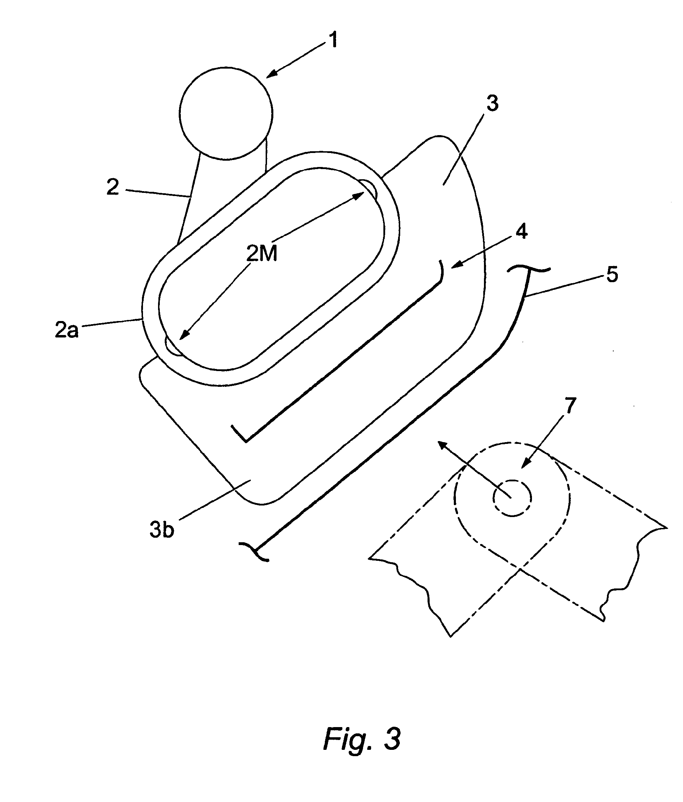

In the third embodiment shown in Figure 3, the support brackets 2 are attached to the transverse member 3 by means of hollow deformable members 2a in the form of a closed loop having notches 2M on opposite inner sides thereof aligned normally to the expected direction of impact such that the resistance of the deformable members 2a to a crushing deformation can be selected to provide the desired degree of deformation such that the deformations of the support brackets 2 in response to impact of the right and left knees of the vehicle occupant in a frontal impact are equal to avoid rotation of the occupant's torso.

The reinforcement means comprises a sheet of rigid material 4 embedded within the impact absorbing foam material 3b of the transverse member 3, said sheet 4 extending through the transverse member 3 between the support brackets 2 to resist deflection of the transverse member 3 in the region between the support brackets 2 which might cause the occupant's knees 7 to be guided towards the steering column assembly 6.

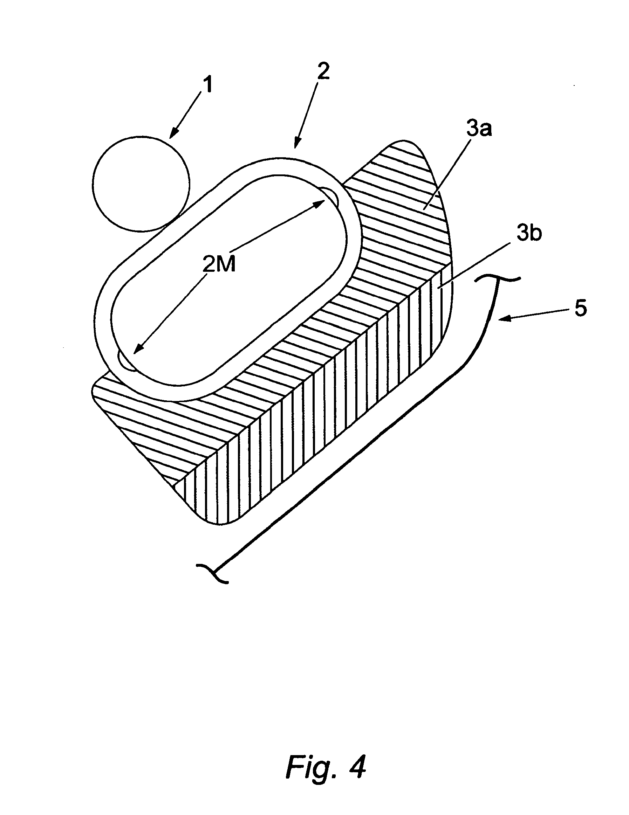

The fourth embodiment shown in Figure 4 is similar to the third embodiment shown in Figure 3, having a similar type of support bracket 2. The support brackets 2 may be attached to the cross car beam 1, for example by welding or fasteners, or may be formed integrally therewith. The main difference between the fourth embodiment and the third is that the reinforcement means preventing bending of the transverse member 3 is provided by a layer of higher density foam 3a sandwiched with the layer of low density energy absorbing foam 3b.

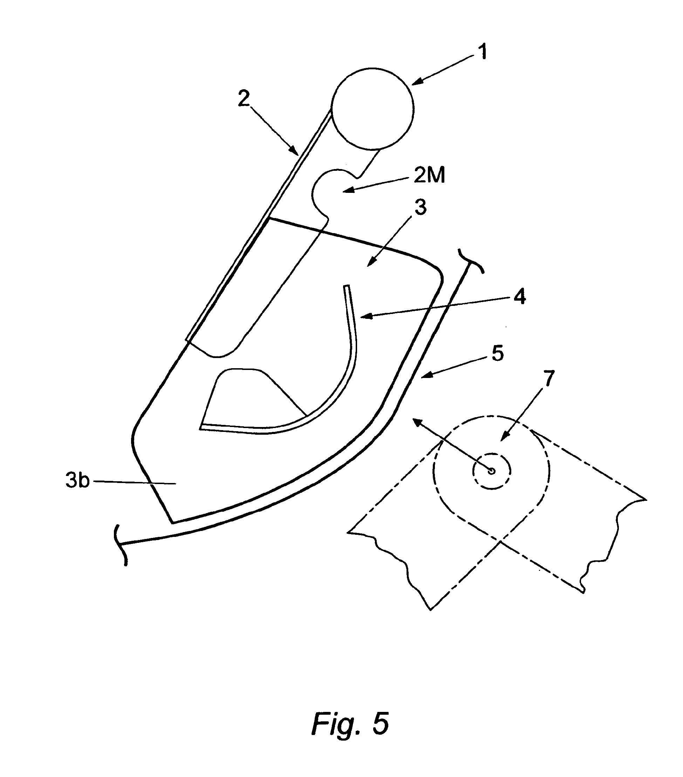

The fifth embodiment shown in Figure 5 is similar to the second embodiment although the design of the support brackets 2 and reinforcement means 4 is slightly different. The support brackets 2 again comprise cantilevered arms attached to the cross car beam 1 (for example by welding or fasteners such as screws), each support bracket having a notch or cut-out provided adjacent the cross car beam by means of which the stiffness of the bracket (resistance to bending) can be selected by varying the size of the notch.

In each embodiment of the present invention, during a frontal collision, the left and the right support brackets 2 deform independently to optimally support and decelerate the left and right knees by equal amounts. The brackets 2 limit the maximum tibia and femur force level. The knee restraint system according to the present invention provides increased crash energy absorption levels and an optimized occupant behaviour during a frontal collision. By selecting the respective notch size 2M in each support bracket, the resistance to deflection and rigidity for each bracket 2 can be predetermined in a cost effective way to provide equal deflection of the left and right knee impact areas in a frontal collision to thus avoid rotation of the occupant's torso.

The low density energy absorbing foam 3b needs to be reinforced (with either an inlay 4 or with a rigid foam component 3a) in order to prevent deflection of the transverse member in the region of the steering column assembly that would otherwise guide the occupant's knees towards the rigid structures of the steering column assembly because of the reduced wall thickness of the transverse member in the region of the steering column assembly.

The proposed system optimally protects the vehicle front seat occupants, particularly the driver, during a frontal collision. Because tuning of the properties of the stiffness of the left and right knee impact areas is possible, the occupant's knees can be guided & supported in a controlled way, in correlation with the restraint system, in order to obtain a smooth driver motion during a collision, without dangerous body rotation.

## Claims

1. A knee restraint for a vehicle comprising a transverse member (3) connectable to the body (1) of the vehicle to be disposed in the region below the instrument panel of the vehicle in front of the knees (7) of an occupant, the transverse member (3) being connectable to the vehicle body (1) by means of support members (2) provided at or adjacent each side of the transverse member (3), whereby the transverse member (3) comprises reinforcement means (4) provided in the region between said support members (2) to resist deflection of the transverse member (3) in said region, **characterised in that** the transverse member (3) is connectable to the vehicle body (1) by means of a first support member (2) at or adjacent a first side of the transverse member and a second support member at or adjacent a second side of the transverse member, the relative stiffness of the first and second support members (2) being selected or predetermined to provide substantially equal deflection in the case of an impact by a respective left and right knee of a vehicle occupant, thereby preventing rotation of the occupant's body during impact with the knee restraint in the event of a collision.

2. A knee restraint as claimed in claim 1, wherein the reinforcement means (4) extends between the support members (2).

3. A knee restraint as claimed in claim 2, wherein the reinforcement means (4) is affixed to the support members (2).

4. A knee restraint as claimed in any preceding claim, wherein the transverse member (3) includes a first layer of energy absorbing foam (3b) for absorbing the impact of the occupant's knees therewith.

5. A knee restraint as claimed in claim 4 wherein the reinforcement means (4) is affixed to or embedded within the first layer of foam (3b).

6. A knee restraint as claimed in claim 4 or claim 5, wherein the reinforcement means (4) comprises a second layer of foam (3a) having a greater stiffness and/or hardness and/or density than the first layer of foam (3b).

7. A knee restraint as claimed in claim 6, wherein the first layer of foam (3b) has a density of between 30 and 60 g/l and the second layer of foam (3a) has a density of at least 100g/l.

8. A knee restraint as claimed in any of claims 1 to 5 wherein the reinforcement means (4) comprises a sheet of rigid material.

9. A knee restraint as claimed in claim 8, wherein sheet of rigid material (4) is formed from plastic or a metal.

10. A knee restraint as claimed in any of claims 1 to 5, wherein the reinforcement means (4) comprises a thin walled deformable structure.

11. A knee restraint as claimed in any preceding claim, wherein the support members (2) are adapted to be deformable to absorb the impact of the occupant's knees (7) with the knee restraint.

12. A knee restraint as claimed in any preceding claim, wherein each of the first and second support members (2) includes at least one notch, cut-out or other region of reduced material thickness or cross section (2M), the stiffness of each of the first and second support members (2) being determined by the size and/or shape of the notch or cut-out (2M) therein

13. A knee restraint as claimed in any preceding claim, wherein the wall thickness of the transverse member (3) in the left and right knee impact areas is selected or adapted to provide preselected energy absorbtion properties and/or rigidity.

## Patentansprüche

1. Knierückhaltung für ein Fahrzeug, umfassend ein Querelement (3), das mit der Karosserie (1) des Fahrzeugs verbindbar ist, um in dem Gebiet unterhalb der Instrumententafel des Fahrzeugs vor den Knien (7) eines Insassen angeordnet zu werden, wobei das Querelement (3) mit der Fahrzeugkarosserie (1) über Stützelemente (2) verbindbar ist, die an oder benachbart jeder Seite des Querelementes (3) vorgesehen sind, wobei das Querelement (3) ein Aussteifungsmittel (4) umfasst, das in dem Gebiet zwischen den Stützelementen (2) vorgesehen ist, um einer Auslenkung des Querelements (3) in dem Gebiet entgegenzuwirken,
**dadurch gekennzeichnet, dass**
das Querelement (3) mit der Fahrzeugkarosserie (1) durch ein erstes Stützelement (2) an oder benachbart einer ersten Seite des Querelementes und ein zweites Stützelement an oder benachbart einer zweiten Seite des Querelementes verbindbar ist, wobei die relative Steifigkeit des ersten und zweiten Stützelementes (2) gewählt oder vorbestimmt ist, um in dem Fall eines Aufpralles durch ein jeweiliges linkes und rechtes Knie eines Fahrzeuginsassen eine im Wesentlichen gleiche Auslenkung bereitzustellen, wodurch eine Drehung des Körpers des Insassen während des Aufpralls mit der Knierückhaltung in dem Falle einer Kollision verhindert wird.

2. Knierückhaltung nach Anspruch 1,
wobei das Aussteifungsmittel (4) zwischen den Stützelementen (2) verläuft.

3. Knierückhaltung nach Anspruch 2,
wobei das Aussteifungsmittel (4) an den Stützelementen (2) befestigt ist.

4. Knierückhaltung nach einem der vorhergehenden Ansprüche,
wobei das Querelement (3) eine erste Schicht aus energieabsorbierendem Schaum (3b) zur Absorption des Aufpralls der Knie des Insassen damit umfasst.

5. Knierückhaltung nach Anspruch 4,
wobei das Aussteifungsmittel (4) an der ersten Schicht aus Schaum (3b) befestigt oder darin eingebettet ist.

6. Knierückhaltung nach einem der Ansprüche 4 oder 5,
wobei das Aussteifungsmittel (4) eine zweite Schicht aus Schaum (3a) besitzt, die eine größere Steifigkeit und/oder Härte und/oder Dichte besitzt, als die erste Schicht aus Schaum (3b).

7. Knierückhaltung nach Anspruch 6,
wobei die erste Schicht aus Schaum (3b) eine Dichte zwischen 30 und 60 g/l besitzt und die zweite Schicht aus Schaum (3a) eine Dichte von zumindest 100 g/l besitzt.

8. Knierückhaltung nach einem der Ansprüche 1 bis 5,
wobei das Aussteifungsmittel (4) eine Tafel aus starrem Material umfasst.

9. Knierückhaltung nach Anspruch 8,
wobei die Tafel aus starrem Material (4) aus Kunststoff oder einem Metall geformt ist.

10. Knierückhaltung nach einem der Ansprüche 1 bis 5,
wobei das Aussteifungsmittel (4) eine dünnwandige verformbare Struktur umfasst.

11. Knierückhaltung nach einem der vorhergehenden Ansprüche,
wobei die Stützelemente (2) derart ausgebildet sind, so dass sie verformbar sind, um den Aufprall der Knie (7) eines Insassen mit der Knierückhaltung zu absorbieren.

12. Knierückhaltung nach einem der vorhergehenden Ansprüche,
wobei jedes des ersten und zweiten Stützelementes (2) zumindest eine Kerbe, einen Ausschnitt oder ein anderes Gebiet mit reduzierter Materialdicke oder reduziertem Querschnitt (2M) aufweist, wobei die Steifigkeit von jedem des ersten und zweiten Stützelementes (2) durch die Größe und/oder Form der Kerbe oder des Ausschnittes (2M) darin bestimmt ist.

13. Knierückhaltung nach einem der vorhergehenden Ansprüche,
wobei die Wanddicke des Querelementes (3) in dem linken und rechten Knieaufprallbereich derart gewählt oder angepasst ist, um vorab gewählte Energieabsorptionseigenschaften und/oder eine vorabgewählte Steifigkeit bereitzustellen.

## Revendications

1. Protège-genoux pour un véhicule, comprenant un élément transversal (3) susceptible d'être relié au corps (1) du véhicule pour être disposé dans la région au-dessous du tableau de bord du véhicule en face des genoux (7) d'un occupant, l'élément transversal (3) étant susceptible d'être relié au corps de véhicule (1) au moyen d'éléments de support (2) prévus sur chaque côté ou en position adjacente à chaque côté de l'élément transversal (3), dans lequel l'élément transversal (3) comprend des moyens de renforcement (4) prévus dans la région entre lesdits éléments de support (2) pour résister à la déflexion de l'élément transversal (3) dans ladite région, **caractérisé en ce que** l'élément transversal (3) est susceptible d'être relié au corps de véhicule (1) au moyen d'un premier élément de support (2) sur un premier côté ou en position adjacente à un premier côté de l'élément transversal, et d'un second élément de support sur un second côté ou en position adjacente à un second côté de l'élément transversal, la raideur relative du premier et du second élément de support (2) étant choisie ou prédéterminée pour assurer une déflexion sensiblement égale dans le cas d'un impact par un genou gauche ou respectivement un genou droit d'un occupant du véhicule, empêchant ainsi une rotation du corps de l'occupant pendant l'impact avec le protège-genoux dans le cas d'une collision.

2. Protège-genoux selon la revendication 1, dans lequel les moyens de renforcement (4) s'étendent entre les éléments de support (2).

3. Protège-genoux selon la revendication 2, dans lequel les moyens de renforcement (4) sont fixés sur les éléments de support (2).

4. Protège-genoux selon l'une quelconque des revendications précédentes, dans lequel l'élément transversal (3) inclut une première couche de mousse absorbant l'énergie (3b) pour absorber l'impact des genoux de l'occupant avec celle-ci.

5. Protège-genoux selon la revendication 4, dans lequel les moyens de renforcement (4) sont fixés sur ou noyés à l'intérieur de la première couche de mousse (3b).

6. Protège-genoux selon la revendication 4 ou 5, dans lequel les moyens de renforcement (4) comprennent une seconde couche de mousse (3a) ayant une raideur et/ou une dureté et/ou une densité plus importante que la première couche de mousse (3b).

7. Protège-genoux selon la revendication 6, dans lequel la première couche de mousse (3b) a une densité entre 30 et 60 g/l et la seconde couche de mousse (3a) a une densité d'au moins 100 g/l.

8. Protège-genoux selon l'une quelconque des revendications 1 à 5, dans lequel les moyens de renforcement (4) comprennent une feuille de matériau rigide.

9. Protège-genoux selon la revendication 8, dans lequel ladite feuille de matériau rigide (4) est formée en matière plastique ou en métal.

10. Protège-genoux selon l'une quelconque des revendications 1 à 5, dans lequel les moyens de renforcement (4) comprennent une structure déformable à paroi mince.

11. Protège-genoux selon l'une quelconque des revendications précédentes, dans lequel les éléments de support (2) sont adaptés à être déformables pour absorber l'impact des genoux de l'occupant (7) avec le protège-genoux.

12. Protège-genoux selon l'une quelconque des revendications précédentes, dans lequel chacun du premier et du second élément de support (2) inclut au moins une encoche, une découpe ou une autre région dans laquelle l'épaisseur ou la section transversale du matériau est réduite (2M), la raideur de chacun du premier et du second élément de support (2) étant déterminée par la taille et/ou par la forme de l'encoche ou de la découpe (2 M) dans ceux-ci.

13. Protège-genoux selon l'une quelconque des revendications précédentes, dans lequel l'épaisseur de paroi de l'élément transversal (3) dans les zones d'impact du genou gauche et du genou droit est choisie ou adaptée pour présenter des propriétés d'absorption d'énergie prédéterminées et/ou une rigidité prédéterminée.
